(19) Europäisches Patentamt
European Patent Office
Office européen des brevets

(11) **EP 4 223 113 B1**

(12) **EUROPÄISCHE PATENTSCHRIFT**

(45) Veröffentlichungstag und Bekanntmachung des Hinweises auf die Patenterteilung:
**14.02.2024 Patentblatt 2024/07**

(21) Anmeldenummer: **22155476.9**

(22) Anmeldetag: **07.02.2022**

(51) Internationale Patentklassifikation (IPC):
**A01K 13/00** *(2006.01)* **A47G 9/02** *(2006.01)*

(52) Gemeinsame Patentklassifikation (CPC):
**A01K 13/008; A47G 9/0207; A47G 9/0223**

(54) **ABDECKVORRICHTUNG**

COVERING DEVICE

DISPOSITIF DE COUVERTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.08.2023 Patentblatt 2023/32**

(73) Patentinhaber: **Sanders-Kauffmann GmbH 49565 Bramsche (DE)**

(72) Erfinder: **Schingarjow, Swetlana 49525 Lengerich (DE)**

(74) Vertreter: **Wischmeyer, André et al Busse & Busse Patent- und Rechtsanwälte Partnerschaft Großhandelsring 6 49084 Osnabrück (DE)**

(56) Entgegenhaltungen:
**WO-A1-92/18036 US-A1- 2014 250 596**

**Beschreibung**

Die Erfindung betrifft eine Abdeckvorrichtung, insbesondere eine Decke. Die Abdeckvorrichtung umfasst zumindest drei Abdeckabschnitte. Ein erster der Abdeckabschnitte weist einen ersten Verbindungsbereich auf. In einem Querschnitt der Abdeckvorrichtung ist der erste Abdeckabschnitt mit dem ersten Verbindungsbereich an einem zweiten der Abdeckabschnitte angeordnet. Der erste Verbindungsbereich ist von einem ersten Querschnittsende des ersten Abdeckabschnittes ausgebildet bzw. fällt mit diesem zusammen. Der erste Abdeckabschnitt weist im Querschnitt ein zweites Querschnittsende auf, das dem ersten Querschnittsende gegenüberliegt. Außerdem weist der erste Abdeckabschnitt einen zweiten Verbindungsbereich auf, mit dem der erste Abdeckabschnitt an einem dritten Abdeckabschnittelement angeordnet ist.

Derartige Abdeckvorrichtungen dienen insbesondere zum Abdecken von menschlichen oder tierischen Körpern. Bekannte Abdeckvorrichtungen bieten häufig nur eine unzureichende Belüftung. Zur Verbesserung der Belüftung offenbart die DE20221416U1 eine Decke mit einer Mehrzahl von Ventilationsöffnungen. Diese Decke hat jedoch zum einen noch den Nachteil, dass bei geringen Umgebungstemperaturen die Wärme des Körpers über die Ventilationsöffnungen an die Umgebung abgegeben wird, das heißt eine mangelnde Isolation gegeben ist, und der Körper auskühlt. Zum anderen hat die Decke noch den Nachteil, dass bei hohen Umgebungstemperaturen die Ventilationsöffnungen zur Wärmeabfuhr unzureichend sind und der Körper überhitzt.

Darüber hinaus ist bei der von der Erfindung betroffenen Abdeckvorrichtung der zweite Verbindungsbereich des ersten Abdeckabschnittes in dem Querschnitt vom zweiten Querschnittsende des ersten Abdeckabschnittes beabstandet angeordnet. Eine derartige Abdeckvorrichtung ist aus der US 2014/0250596 A1 bekannt, die eine Bettdecke mit Hitzedurchlässen zwischen Isolationsabschnitten offenbart. Die vorbeschriebenen Nachteile treten auch bei dieser Bettdecke noch in signifikantem Ausmaß auf.

Aufgabe der vorliegenden Erfindung ist die Bereitstellung einer Abdeckungsvorrichtung, die die vorgenannten Nachteile vermeidet.

Erfindungsgemäß ist der erste Abdeckabschnitt mit dem zweiten Verbindungsbereich an einem Querschnittsende des dritten Abdeckabschnittes angeordnet. Das Querschnittsende des dritten Abdeckabschnittes gleicht erfindungsgemäß dem ersten Querschnittsende des ersten Abdeckabschnittes.

Bei der Abdeckvorrichtung handelt es sich bevorzugt um eine Zudecke, insbesondere eine Rasterdecke, bevorzugt eine Steppdecke oder Daunendecke. Die Abdeckvorrichtung dient insbesondere zur Abdeckung, zum Wärmen und zum Belüften eines menschlichen Körpers. Die Abdeckvorrichtung hat insbesondere eine Breite von mindestens 0,8 m und eine Länge von mindestens 0,8 m. Im Einsatz befindet sich die Abdeckvorrichtung bevorzugt innerhalb eines Bettbezuges und auf dem Körper.

Die Abdeckvorrichtung ist bevorzugt zumindest überwiegend aus Textilien ausgebildet. Die Abdeckvorrichtung ist insbesondere forminstabil und flexibel ausgebildet, um sich an den Körper anpassen zu können. Die nachfolgenden Merkmale betreffen insbesondere die Abdeckvorrichtung, während sie ausgebreitet auf einer ebenen Oberfläche aufliegt und die jeweiligen Komponenten gestrafft vorliegen.

Die Abdeckabschnitte der Abdeckvorrichtung oder zumindest eine Mehrzahl derer sind insbesondere zumindest im Wesentlichen übereinstimmend ausgebildet. Der Querschnitt durch die Abdeckvorrichtung verläuft rechtwinklig zur Haupterstreckungsrichtung und/oder zur Längsrichtung der Abdeckvorrichtung. Alternativ verläuft der Querschnitt in die Haupterstreckungsrichtung bzw. Längsrichtung.

Der erste Abdeckabschnitt ist im Querschnitt insbesondere, zumindest bei Ausbleiben äußerer Kräfte, zumindest im Wesentlichen spiegelsymmetrisch zu einer die Abdeckvorrichtung mittig und flach schneienden Ebene, die rechtwinklig zur Querschnittsebene angeordnet ist, ausgebildet. Die Querschnittsenden des ersten Abdeckabschnittes sind im Querschnitt insbesondere die Punkte, in denen die Kontur des Abdeckabschnittes die Ebene schneidet. Der erste Abdeckabschnitt oder der Hauptteil wie ein Isolationsabschnitt davon ist im Querschnitt insbesondere länglich, bevorzugt in Form einer konvexen Linse, ausgebildet, wobei die Längsenden bzw. die Ecken der Kontur des Abdeckabschnittes die Querschnittsenden bilden. Die Querschnittsenden haben dabei einen größeren Abstand voneinander als irgendwelche andere Bereiche des ersten Abdeckabschnitts im Querschnitt.

Mit den Verbindungsbereichen grenzt der erste Abdeckabschnitt unmittelbar an den zweiten bzw. dritten Abdeckabschnitt an. Der erste Abdeckabschnitt ist insbesondere dauerhaft mit den weiteren Abdeckabschnitten verbunden, das heißt nicht zerstörungsfrei von den weiteren Abdeckabschnitten zu trennen. Alternativ ist der erste Abdeckabschnitt lösbar mit zumindest einem der weiteren Abdeckabschnitte verbunden. Dadurch, dass der zweite Verbindungsbereich des ersten Abdeckabschnittes in dem Querschnitt vom zweiten Querschnittsende des ersten Abdeckabschnittes beabstandet ist, grenzt der dritte Abdeckabschnitt nicht an das zweite Querschnittsende des ersten Abdeckabschnittes, sondern insbesondere an eine der Hauptflächen des ersten Abdeckabschnittes zwischen den Querschnittsenden des ersten Abdeckabschnittes an. Der erste Abdeckabschnitt steht somit zumindest teilweise über den dritten Abdeckabschnitt über bzw. überlappt den dritten Abdeckabschnitt.

Im Einsatz liegt die Abdeckvorrichtung je nach Größe des abzudeckenden Körpers im Querschnitt zumindest teilweise im Wesentlichen bogenförmig auf dem / um den Körper. Wird die Abdeckvorrichtung so genutzt, dass der zweite Verbindungsbereich dem abzudeckenden Körper zugewandt ist, ragt das zweite Querschnittsende auf der vom Körper abgewandten Seite der Abdeckvorrichtung vom dritten Abdeckabschnitt nach außen weg. Dadurch ist die Isolationswirkung des ersten Abdeckabschnittes reduziert und folglich die Abdeckvorrichtung für höhere Umgebungstemperaturen geeignet. Wird die Abdeckvorrichtung andersherum eingesetzt, wobei der zweite Verbindungsbereich des ersten Abdeckabschnittes vom Körper abgewandt ist, liegt der dritte Abdeckabschnitt aufgrund der Bogenform unmittelbar am ersten Abdeckabschnitt an und überlappt diesen. Dadurch ist eine größere Isolationswirkung erreicht, mit der die selbe Decke auch für geringere Umgebungstemperaturen geeignet ist. Somit ist eine Abdeckvorrichtung geschaffen, die im Gegensatz zu den vorbekannten Abdeckvorrichtungen für einen weiten Bereich von Umgebungstemperaturen eine geeignete Isolationswirkung zur Verfügung stellt.

Durch die erfindungsgemäße Ausbildung lässt sich die Isolationswirkung im erstgenannten Einsatzfall besonders wirksam reduzieren.

Vorzugsweise ist der Abstand des zweiten Verbindungsbereiches vom zweiten Querschnittsende des ersten Abdeckabschnittes zumindest $\frac{1}{20}$, insbesondere zumindest $\frac{1}{10}$, bevorzugt zumindest $\frac{1}{7}$, besonders bevorzugt zumindest $\frac{1}{5}$ des Abstandes des ersten Querschnittsendes vom zweiten Querschnittsende oder einer zwischen den Querschnittsenden gelegenen Verbindungsnaht vom zweiten Querschnittsende. Die Abstände sind derart zu verstehen, dass sie der entlang der Kontur des ersten Abdeckabschnittes mindestens zurückzulegenden Strecke entsprechen. Durch die genannten Abstände lässt sich die Isolationswirkung besonders weitreichend variieren.

In einer vorteilhaften Ausgestaltung der Erfindung weist zumindest einer der Abdeckabschnitte einen Isolationsabschnitt auf. Insbesondere weist jeder Abdeckabschnitt genau einen Isolationsabschnitt auf. Der Isolationsabschnitt umfasst eine Hülle, die einen Hohlraum umhüllt, in dem ein Isolationsmittel angeordnet ist. Die Hülle ist bevorzugt aus einer insbesondere dünnen Textilie, bevorzugt einem Gewebe, ausgebildet. Bei dem Isolationsmittel handelt es sich bevorzugt um Natur- oder Kunstfasern, Natur- oder Tierhaar oder Daunen. Die Hülle grenzt dabei an die Umgebung. Vorzugsweise sind sämtliche Abdeckabschnitte derart ausgebildet.

Der zumindest eine Abdeckabschnitt weist insbesondere zumindest eine Endnaht zur Bildung zumindest eines der Querschnittsenden auf, die sich in eine zur Querschnittsebene angewinkelte, insbesondere rechtwinklige Richtung erstreckt. Die Endnaht verläuft insbesondere durch eines der Querschnittsenden im Querschnitt.

Die Endnaht ist insbesondere derart ausgebildet, dass sie ein Oberteil der Hülle mit einem Unterteil der Hülle verbindet. Bevorzugt verläuft durch jedes Querschnittsende zumindest eine Endnaht. Die zumindest eine Naht ist dabei unabhängig vom Vorliegen eines Isolationsmittels vorteilhaft. Derartig aufgebaute Abdeckabschnitte ermöglichen eine besonders gute Isolationswirkung.

Bevorzugt sind die Isolationsabschnitte der unterschiedlichen Abdeckabschnitte zumindest teilweise unterschiedlich breit. Insbesondere weicht der Abstand zwischen dem ersten Querschnittsende des ersten Abdeckabschnittes und dem zweiten Querschnittsende des ersten Abdeckabschnittes von dem Abstand zwischen einem ersten Querschnittsende eines der anderen Abdeckabschnitte und einem zweiten Querschnittsende des anderen Abdeckabschnittes ab. Alternativ oder zusätzlich weicht insbesondere der Abstand zwischen dem zweiten Querschnittsende des ersten Abdeckabschnittes und einem Durchlasselement des ersten Abdeckabschnittes von dem Abstand zwischen dem zweiten Querschnittsende des anderen Abdeckabschnittes und einem Durchlasselement des anderen Abdeckabschnittes ab. Die zweiten Querschnittsenden sind dabei von dem Durchlasselement abgewandt angeordnet. Durch die unterschiedlichen Abstände bzw. Breiten der Isolationsabschnitte ist die Abdeckvorrichtung optimal an bestimmte Körper anzupassen. Insbesondere ist die Abdeckvorrichtung hierdurch zur Abdeckung zweier Körper auszubilden. Besonders bevorzugt ist der vordefinierte Abstand beim im Querschnitt äußersten der Abdeckabschnitte größer als beim benachbarten Abdeckabschnitt. Alternativ oder zusätzlich nehmen die Abstände nach außen hin zumindest teilweise zu. Hierdurch lassen sich die Belüftungswirkung und die Isolationswirkung bedarfsgerecht fokussieren.

Die Hülle weist bevorzugt zumindest eine Verbindungsnaht zur Verbindung des ersten Abdeckabschnittes mit dem dritten Abdeckabschnitt auf. Die Verbindungsnaht erstreckt sich dabei in eine zur Querschnittsebene angewinkelte, insbesondere rechtwinklige Richtung und/oder parallel zur Endnaht. Die Verbindungsnaht verläuft insbesondere durch den zweiten Verbindungsbereich im Querschnitt. Die Verbindungsnaht ist besonders bevorzugt das einzige Mittel, durch das der erste Abdeckabschnitt mit dem dritten Abdeckabschnitt verbunden ist. Durch die Verbindungsnaht lässt sich die erfindungsgemäße Abdeckvorrichtung mit bewehrten Mitteln und somit besonders langlebig herstellen.

Vorzugsweise weist der erste Abdeckabschnitt eine Mehrzahl von zweiten Verbindungsbereichen auf. Die zweiten Verbindungsbereiche des ersten Abdeckabschnittes sind dabei in eine zur Querschnittsebene angewinkelte, insbesondere rechtwinklige Richtung voneinander beabstandet. Benachbarte der zweiten Verbindungsbereiche des ersten Abdeckabschnittes begrenzen einen dazwischen angeordneten Durchlass. In diesem Fall sind der erste und der dritte Abdeckabschnitt (nur) punktuell miteinander verbunden. Insbesondere ist ein Isolationsabschnitt des ersten Abdeckabschnittes punktuell mit einem Isolationsabschnitt des dritten Abdeckabschnittes verbunden. Die Anzahl der in die genannte Richtung beabstandeten zweiten Verbindungsbereiche ist vorzugsweise mindestens drei, besonders bevorzugt mindestens fünf und/oder entspricht bevorzugt zumindest oder genau einer Anzahl von Quernähten des ersten und/oder des dritten Abdeckabschnittes, die parallel zur Querschnittsebene verlaufen und jeweils einen Hohlraum begrenzen bzw. eine Parzelle des jeweiligen Abdeckabschnittes ausbilden. Zwischen den benachbarten zweiten Verbindungsbereichen sind der erste Abdeckabschnitt und der dritte Abdeckabschnitt bevorzugt nicht miteinander verbunden und existiert besonders bevorzugt auch kein anderweitiges Material, wodurch der Durchlass eine maximale Belüftungswirkung hat. Alternativ dazu wird der Durchlass bevorzugt von einem Stoff gebildet bzw. überspannt, der eine größere Belüftungswirkung als der Isolationsabschnitt des ersten Abdeckabschnittes hat. Vorteil der punktuellen Verbindung der Abdeckabschnitte ist, das gegenüber bekannten Abdeckvorrichtungen keine weiteren Bestandteile nötig sind, um eine weitgehend variable Isolationswirkung zu erreichen.

Alternativ zur punktuellen Verbindung des ersten und dritten Abdeckabschnittes erstreckt sich der zweite Verbindungsbereich im Querschnitt zumindest im Wesentlichen so weit in die vorgenannte Richtung, wie sich der erste und/oder der dritte Abdeckabschnitt in dieselbe Richtung erstrecken / erstreckt. In diesem Fall sind die Abdeckabschnitte lückenlos miteinander verbunden und ist eine größere Stabilität erreicht. "Lückenlos" ist in diesem Zusammenhang so zu verstehen, dass ein grobes Gewebe oder Ventilationsöffnungen in einem der Abdeckabschnitte nicht bereits Lücken in der Verbindung darstellen.

Der dritte Abdeckabschnitt weist bevorzugt ein Durchlasselement auf, das sich bis zum zweiten Verbindungsbereichs des ersten Abdeckabschnittes erstreckt. Das Durchlasselement ist insbesondere am Isolationsabschnitt des dritten Abdeckelementes angeordnet und erstreckt sich besonders bevorzugt vom Isolationsabschnitt des dritten Abdeckabschnittes bis zum Isolationsabschnitt des ersten Abdeckabschnittes. Somit lassen sich die Isolationsabschnitte vollständig voneinander beabstanden und eine in die genannte Richtung unveränderliche Belüftungswirkung einstellen. Das Durchlasselement hat bevorzugt eine höhere Luftdurchlässigkeit pro Druckgefälle als der Isolationsabschnitt des ersten bzw. dritten Abdeckelementes. Das Durchlasselement ist bevorzugt von einer Textilie, bevorzugt einem Gewebe, mit Belüftungsöffnungen wie z.B. einem Netzgitter gebildet. Alternativ oder zusätzlich ist das Durchlasselement bevorzugt von dem Gewebe gebildet, das die Hülle zumindest mitausbildet. Hierdurch lässt sich eine besonders weitreichende Belüftungswirkung bzw. eine erhöhte Zuverlässigkeit durch die Verwendung bewährter Stoffe erreichen.

Vorzugsweise ist der Abstand des Isolationsabschnittes des dritten Abdeckabschnittes vom zweiten Verbindungsbereich des ersten Abdeckabschnittes höchstens so groß wie der Abstand des zweiten Verbindungsbereiches vom zweiten Querschnittsende des ersten Abdeckabschnittes. Besonders bevorzugt sind die Abstände zumindest im Wesentlichen gleich groß. Der Abstand des Isolationsabschnittes des dritten Abdeckabschnittes vom zweiten Verbindungsbereich meint dabei die Strecke entlang der Kontur des Durchlasselementes zwischen dem ersten Abdeckabschnitt und dem Isolationsabschnitt des dritten Abdeckabschnittes im Querschnitt. Durch diese Ausbildung lässt sich im Falle geringer Umgebungstemperaturen sicherstellen, dass die Isolationsabschnitte der Abdeckabschnitte miteinander überlappen oder zumindest aneinander angrenzen und so keine Wärme unbeabsichtigt durch das Durchlasselement entweichen kann.

In einer vorteilhaften Ausgestaltung der Erfindung weist die Abdeckvorrichtung eine Mehrzahl von Gruppen von je drei Abdeckabschnitten, die gemäß dem ersten, zweiten und dritten Abdeckabschnitt ausgebildet sind, auf. Insbesondere weist die Abdeckvorrichtung zumindest vier solcher Gruppen auf. Die Gruppen sind dabei so zu verstehen, dass sie sich in mindestens einem der drei zugehörigen Abdeckabschnitte voneinander unterscheiden. Einzelne Abdeckabschnitte können mehrere Gruppen (gleichzeitig) mitausbilden. Folglich können bereits vier Abdeckabschnitte zwei Gruppen ausbilden und sechs Abdeckabschnitte vier Gruppen ausbilden. Durch diese Ausbildung der Abdeckvorrichtung lassen sich die vorbeschriebenen Wirkungen in einem besonders weiten Umfang und homogen über die gesamte Fläche der Abdeckvorrichtung erreichen.

Vorzugsweise haben mehrere, insbesondere sämtliche, der Gruppen im Querschnitt eine übereinstimmende Ausrichtung. Das bedeutet, dass die Gruppen nicht gespiegelt zueinander, sondern gleichartig orientiert versetzt zueinander ausgebildet sind. Hierdurch lässt sich eine besonders homogene Belüftungswirkung erreichen. Alternativ dazu sind zumindest zwei der Gruppen, insbesondere die gesamte Abdeckvorrichtung, spiegelsymmetrisch ausgebildet. Dies führt dazu, dass im Einsatz der Abdeckvorrichtung derart, dass die Spiegelebene den abzudeckenden Körper vertikal schneidet, beide Flanken des Körpers in gleicher Weise belüftet werden.

Insbesondere weist die Abdeckvorrichtung jedenfalls eine Mehrzahl von im Querschnitt beabstandeten Durchlasselementen auf. Das Verhältnis der Zahl von Durchlasselementen zur Zahl von Isolationsabschnitten ist bevorzugt ≥ 0,5 und ≤ 1. Bevorzugt weisen zumindest $\frac{2}{3}$ der Abdeckabschnitte ein Durchlasselement auf.

Weitere Einzelheiten und Vorteile der Erfindung sind den nachfolgend beschriebenen, schematisch dargestellten Ausführungsbeispiel zu entnehmen. Es zeigen:

Fig. 1      einen Querschnitt einer ersten erfindungsgemäßen Abdeckvorrichtung,

Fig. 2      einen Querschnitt einer zweiten erfindungsgemäßen Abdeckvorrichtung,

Fig. 3      einen Querschnitt einer dritten erfindungsgemäßen Abdeckvorrichtung,

Fig. 4      eine Draufsicht auf eine vierte erfindungsgemäße Abdeckvorrichtung in einer ersten Konfiguration,

Fig. 5      eine Draufsicht auf die vierte erfindungsgemäße Abdeckvorrichtung in einer zweiten Konfiguration,

Fig. 6      einen Querschnitt der vierten erfindungsgemäßen Abdeckvorrichtung in der zweiten Konfiguration im Einsatz,

Fig. 7      einen Querschnitt der vierten erfindungsgemäßen Abdeckvorrichtung in der ersten Konfiguration im Einsatz,

Fig. 8      eine perspektivische Schnittdarstellung einer fünften erfindungsgemäßen Abdeckvorrichtung,

Fig. 9      eine perspektivische Schnittdarstellung einer sechsten erfindungsgemäßen Abdeckvorrichtung,

Fig. 10      eine perspektivische Schnittdarstellung einer siebten erfindungsgemäßen Abdeckvorrichtung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

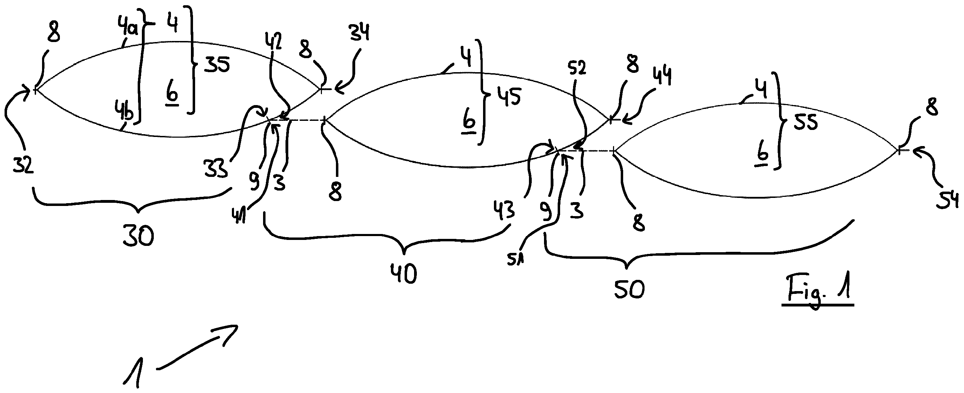

Die erste erfindungsgemäße Abdeckvorrichtung 1 weist drei Abdeckabschnitte 30, 40, 50 auf. Im Querschnitt gemäß Fig. 1 ist ein erster der Abdeckabschnitte 40 mit einem ersten Verbindungsbereich 41 an einem zweiten der Abdeckabschnitte 30 angeordnet. Der erste Verbindungsbereich 41 ist dabei von einem ersten Querschnittsende 42 des ersten Abdeckabschnittes 40 ausgebildet. Der erste Abdeckabschnitt 40 weist ferner ein zweites Querschnittsende 44 auf, das dem ersten Querschnittsende 42 gegenüberliegt. Außerdem weist der erste Abdeckabschnitt 40 einen zweiten Verbindungsbereich 43 auf, mit dem der erste Abdeckabschnitt 40 an einem dritten der Abdeckabschnitte 50 angeordnet ist. Der zweite Verbindungsbereich 43 ist dabei vom zweiten Querschnittsende 44 beabstandet angeordnet. Der zweite Abdeckabschnitt 30 hat ein zweites Querschnittsende 34 und einen zweiten Verbindungsbereich 33, die dem zweiten Querschnittsende 44 und dem zweiten Verbindungsbereich 43 des ersten Abdeckabschnittes 40 entsprechen, wobei das erste Querschnittsende 32 des zweiten Abdeckabschnittes 30 abweichend vom ersten Querschnittsende 42 des ersten Abdeckabschnittes ausgebildet ist. Der dritte Abdeckabschnitt 50 hat ein erstes Querschnittsende 52, ein zweites Querschnittsende 54 und einen ersten Verbindungsbereich 51, die dem ersten Querschnittsende 42, dem zweiten Querschnittsende 44 und dem ersten Verbindungsbereich 41 des ersten Abdeckabschnittes 40 entsprechen. Diesen Aufbau zeigen auch die weiteren erfindungsgemäßen Abdeckvorrichtungen 1.

Jeder der gezeigten Abdeckabschnitte 30, 40, 50 weist einen Isolationsabschnitt 35, 45, 55 auf. Jeder Isolationsabschnitt 35, 45, 55 umfasst eine Hülle 4 aus einem Oberteil 4a und einem Unterteil 4b. Die Hülle 4 umhüllt einen ein Isolationsmittel aufweisenden Hohlraum 6. Das Oberteil 4a und das Unterteil 4b der Isolationsabschnitte 35, 45, 55 sind im Bereich der Querschnittsenden 34, 44, 54 der gezeigten Abdeckabschnitte 30, 40, 50 mittels Endnähten 8 miteinander verbunden.

Der erste Abdeckabschnitt 40 weist ebenso wie der dritte Abdeckabschnitt 50 ein Durchlasselement 3 auf. Dieses ist jeweils mittels einer Endnaht 8 am Isolationsabschnitt 45, 55 angeordnet und erstreckt sich bis zum zweiten Verbindungsbereich 33, 43 des zweiten Abdeckabschnittes 30 bzw. des ersten Abdeckabschnittes 40. Die Durchlasselemente 3 weisen Belüftungsöffnungen auf. Der Abstand des zweiten Verbindungsbereiches 43 vom Querschnittsende 44, gemessen entlang der Kontur der Hülle 4 des ersten Abdeckabschnittes 40, entspricht der im Querschnitt messbaren Länge des Durchlasselementes 3. Der Abstand des zweiten Verbindungsbereiches 43 vom zweiten Querschnittsende 44 ist zumindest $\frac{1}{5}$ des Abstandes des ersten Querschnittendes 42 oder der Endnaht 8, die das Durchlasselement 3 mit dem Isolationsabschnitt 45 verbindet, vom zweiten Querschnittsende 44 entlang der Kontur der Hülle 4. Das vorgeschriebene gilt ebenso für den zweiten Abdeckabschnitt 30 und den ersten Abdeckabschnitt 40.

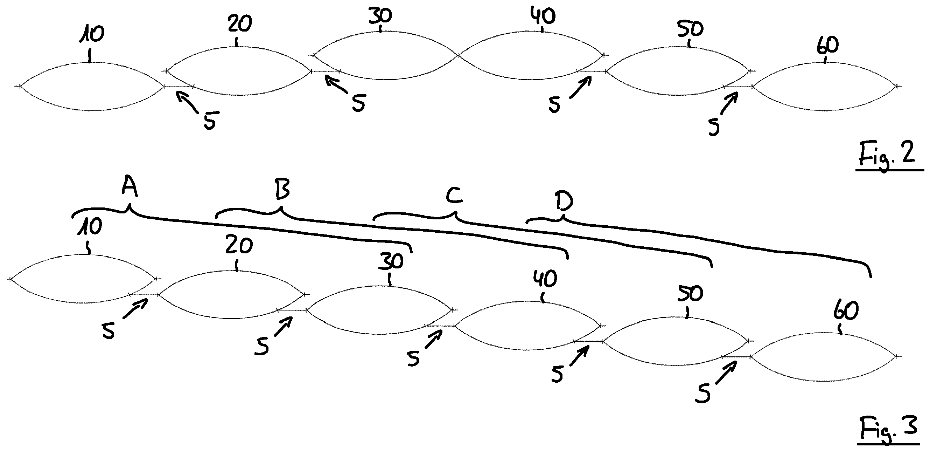

Die Abdeckvorrichtung 1 gemäß Fig. 2 umfasst sechs Abdeckabschnitte 10, 20, 30, 40, 50, 60 und ist dabei spiegelsymmetrisch aus zwei miteinander verbundenen Abdeckvorrichtungen 1 gemäß Fig. 1 aufgebaut.

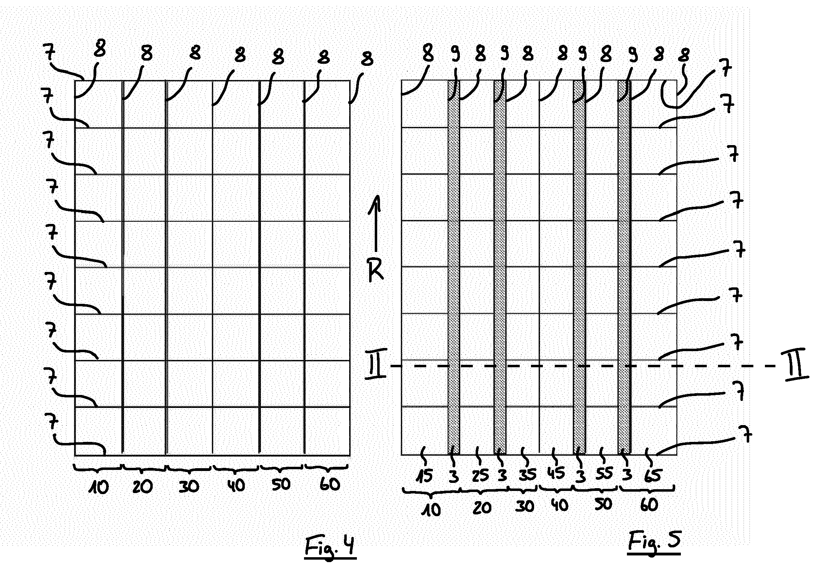

Jedes Durchlasselement 3 bildet einen Durchlass 5 für Luft. Die Abdeckvorrichtung 1 gemäß den Fig. 4 bis 7 ähnelt zumindest der Abdeckvorrichtung 1 gemäß Fig. 2, deren Querschnittsebene schematisch durch die Schnittlinie II in Fig. 5 angedeutet ist. Fig. 5 zeigt die Abdeckvorrichtung in der in Fig. 2 gezeigten Konfiguration von unten, sodass die vier Durchlasselemente 3 sichtbar sind. Fig. 4 zeigt die Abdeckvorrichtung 1 in einer Konfiguration, in der die Abdeckabschnitte 10, 20, 30, 40, 50, 60 geschlossen aneinander vorliegen und die Durchlasselemente 3 zwischen den Abdeckabschnitten 10, 20, 30, 40, 50, 60 liegen. Neben den Endnähten 8 und den Verbindungsnähten 9 zeigen die Fig. 4 und 5 zusätzlich Quernähte 7, die unterschiedliche Hohlräume 6 der Abdeckabschnitte 10, 20, 30, 40, 50, 60 voneinander trennen. Die Endnähte 8 und die Verbindungsnähte 9 erstrecken sich in eine zur Querschnittsebene rechtwinklige Richtung R. Die zweiten Verbindungsbereiche 43 der Abdeckabschnitte 20, 30, 40, 50 erstrecken sich soweit in die Richtung R wie die Abdeckabschnitte 20, 30, 40, 50 selbst.

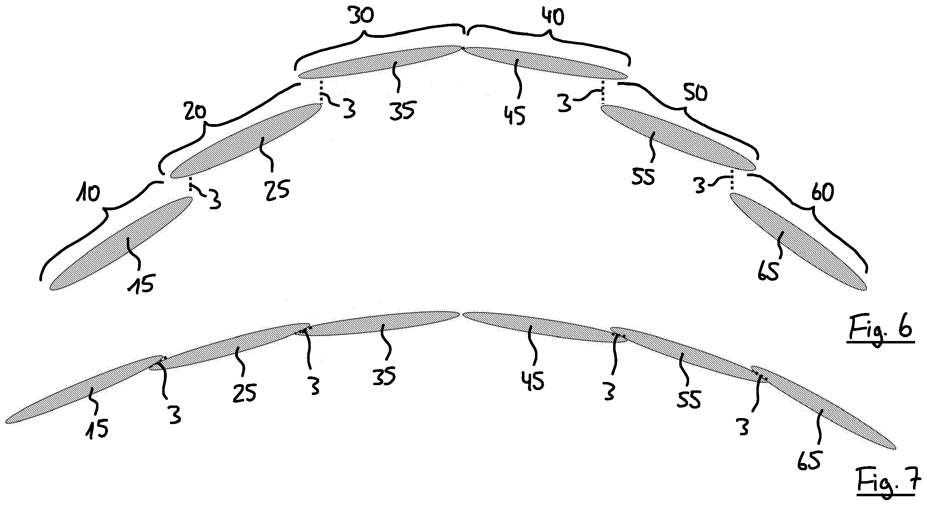

Die Fig. 6 bis 8 verdeutlichen den Vorteil der erfindungsgemäßen Abdeckvorrichtung 1. Wird die Abdeckvorrichtung 1 derart verwendet, dass die Durchlasselemente 3 dem nicht dargestellten, abzudeckenden Körper zugewandt sind, entfernen sich die Isolationsabschnitte 15, 25, 55, 65 der äußeren Abdeckabschnitte 10, 20, 50, 60 schwerkraftbedingt voneinander und die Durchlasselemente 3 werden gespannt.

Dadurch werden Durchlässe 5 zwischen den Isolationsabschnitten 15, 25, 35, 45, 55, 65 hergestellt, der eine Belüftung des Körpers bewirken, wodurch die Abdeckvorrichtung 1 insbesondere für hohe Umgebungstemperaturen geeignet ist. Wird die Abdeckvorrichtung 1 dagegen gemäß Fig. 7 derart eingesetzt, dass die Durchlasselemente 3 vom abzudeckenden Körper abgewandt sind, bewirken die Durchlasselemente 3 eine lückenlose Anordnung der Isolationsabschnitte 15, 25, 35, 45, 55, 65 aneinander und dadurch eine verbesserte Isolationswirkung, wodurch die Abdeckvorrichtung 1 insbesondere für geringere Umgebungstemperaturen geeignet ist.

Die Abdeckvorrichtung 1 gemäß Fig. 3 ist im Gegensatz zur derjenigen gemäß Fig. 2 nicht spiegelsymmetrisch ausgebildet. Stattdessen weist sie vier Gruppen A, B, C, D von Abdeckabschnitten 10, 20, 30, 40, 50, 60 auf, die im Querschnitt eine übereinstimmende Ausrichtung haben.

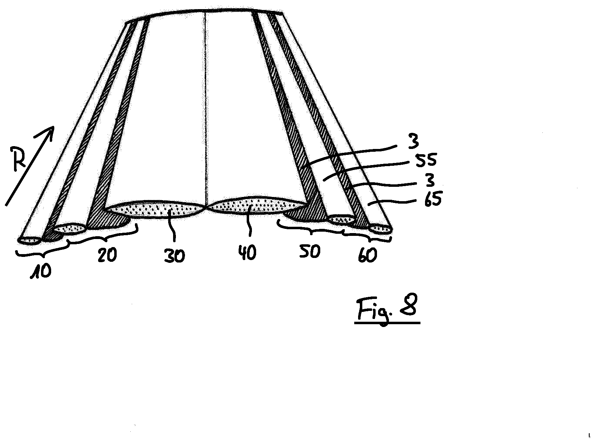

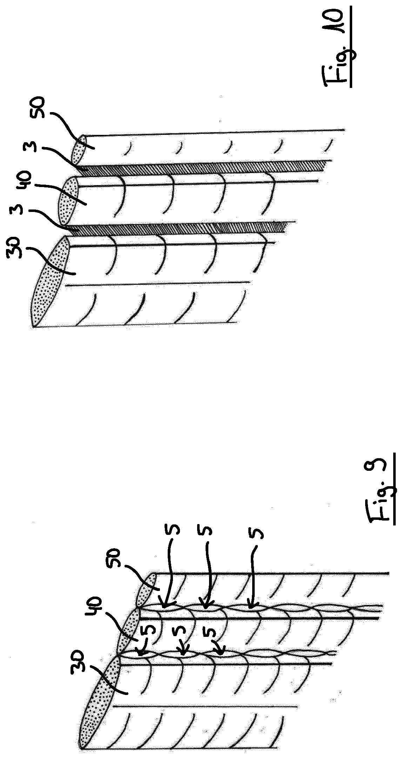

Die Abdeckvorrichtung 1 gemäß Fig. 10 ähnelt der Abdeckvorrichtung 1 gemäß Fig. 1, wobei die Durchlasselemente 3 ebenso wie das Isolationsmittel, wie auch in Fig. 8, schematisch dargestellt sind. Fig. 9 zeigt eine alternativ ausgebildete Abdeckvorrichtung 1, bei der der erste Abdeckabschnitt 40 mehrere in die Richtung R versetzte, zweite Verbindungsbereiche 43 aufweist. Benachbarte zweite Verbindungsbereiche 43 begrenzen einen dazwischen angeordneten Durchlass 5. Dabei entspricht die Anzahl der zweiten Verbindungsbereiche 43 der Anzahl der Quernähte 7.

## Patentansprüche

1. Abdeckvorrichtung (1) umfassend zumindest drei Abdeckabschnitte (10, 20, 30, 40, 50, 60), wobei in einem Querschnitt der Abdeckvorrichtung (1) ein erster der Abdeckabschnitte (40) mit einem ersten Verbindungsbereich (41), der von einem ersten Querschnittsende (42) des ersten Abdeckabschnittes (40) ausgebildet ist, an einem zweiten der Abdeckabschnitte (30) angeordnet ist und ein zweites Querschnittsende (44), das dem ersten Querschnittsende (42) gegenüberliegt, und einen zweiten Verbindungsbereich (43) aufweist, mit dem der erste Abdeckabschnitt (40) an einem dritten Abdeckabschnitt (50) angeordnet ist, wobei der zweite Verbindungsbereich (43) des ersten Abdeckabschnittes (40) in dem Querschnitt vom zweiten Querschnittsende (44) des ersten Abdeckabschnittes (40) beabstandet angeordnet ist, **dadurch gekennzeichnet, dass** der erste Abdeckabschnitt (40) mit dem zweiten Verbindungsbereich (43) an einem Querschnittsende (52) des dritten Abdeckabschnittes (50) angeordnet ist, das dem ersten Querschnittsende (42) des ersten Abdeckabschnittes (40) gleicht.

2. Abdeckvorrichtung nach Anspruch 1, **dadurch gekennzeichnet, dass** der Abstand des zweiten Verbindungsbereiches (43) vom zweiten Querschnittsende (44) des ersten Abdeckabschnittes (40) zumindest 1/20, insbesondere zumindest 1/10, bevorzugt zumindest 1/7, besonders bevorzugt zumindest 1/5 des Abstandes des ersten Querschnittsendes (42) vom zweiten Querschnittsende (44) ist.

3. Abdeckvorrichtung nach einem der vorhergehenden Ansprüche, **dadurch gekennzeichnet, dass** zumindest einer, insbesondere sämtliche, der Abdeckabschnitte (10, 20, 30, 40, 50, 60) einen Isolationsabschnitt (15, 25, 35, 45, 55, 65) mit einer Hülle (4) aufweist, die zumindest einen ein Isolationsmittel aufweisenden Hohlraum (6) umhüllt und insbesondere zumindest eine sich in eine zur Querschnittsebene angewinkelte, insbesondere rechtwinklige, Richtung (R) erstreckende Endnaht (8) zur Bildung zumindest eines der Querschnittsenden (32, 34, 42, 44, 52, 54) aufweist.

4. Abdeckvorrichtung nach Anspruch 3, **dadurch gekennzeichnet, dass** der Abstand zwischen dem ersten Querschnittsende (42) des ersten Abdeckabschnittes (40) und dem zweiten Querschnittsende (44) des ersten Abdeckabschnittes (40) von dem Abstand zwischen einem ersten Querschnittsende (32, 52) eines der anderen Abdeckabschnitte (10, 20, 30, 50, 60) und einem zweiten Querschnittsende (34, 54) des anderen Abdeckabschnittes (10, 20, 30, 50, 60) abweicht oder der Abstand zwischen dem zweiten Querschnittsende (44) des ersten Abdeckabschnittes (40) und einem Durchlasselement (3) des ersten Abdeckabschnittes (40) von dem Abstand zwischen dem zweiten Querschnittsende (34, 54) des anderen Abdeckabschnittes (10, 20, 30, 50, 60) und einem Durchlasselement (3) des anderen Abdeckabschnittes abweicht.

5. Abdeckvorrichtung nach Anspruch 4, **dadurch gekennzeichnet, dass** der Abstand beim in dem Querschnitt äußersten der Abdeckabschnitte (10, 60) größer ist als beim benachbarten Abdeckabschnitt (20, 50).

6. Abdeckvorrichtung nach einem der Ansprüche 3 bis 5, **dadurch gekennzeichnet, dass** die Hülle (4) zumindest eine sich in eine zur Querschnittsebene angewinkelte, insbesondere rechtwinklige, Richtung (R) erstreckende Verbindungsnaht (9) zur Verbindung des ersten Abdeckabschnittes (40) mit dem dritten Abdeckabschnitt (50) aufweist.

7. Abdeckvorrichtung nach einem der vorhergehenden Ansprüchen, **dadurch gekennzeichnet, dass** der erste Abdeckabschnitt (40) eine Mehrzahl von in eine zur Querschnittsebene angewinkelte, insbesondere rechtwinklige, Richtung (R) voneinander beabstandeten, zweiten Verbindungsbereichen (43) aufweist, wobei benachbarte zweite Verbindungsbereiche (43) einen dazwischen angeordneten Durchlass (5) begrenzen.

8. Abdeckvorrichtung nach Anspruch 7, **dadurch gekennzeichnet, dass** der erste Abdeckabschnitt (40) mindestens drei, bevorzugt mindestens fünf in die Richtung (R) voneinander beabstandete, zweite Verbindungsbereiche (43) aufweist, besonders bevorzugt mindestens so viele zweite Verbindungsbereiche (43) aufweist, wie der Isolationsabschnitt (45) des ersten Abdeckabschnittes (40) parallel zur Querschnittsebene verlaufende Quernähte (7) aufweist.

9. Abdeckvorrichtung nach einem der vorhergehenden Ansprüche, **dadurch gekennzeichnet, dass** der zweite Verbindungsbereich (43) im Querschnitt sich in eine zur Querschnittsebene angewinkelte, insbesondere rechtwinklige, Richtung (R) zumindest im Wesentlichen so weit erstreckt, wie sich der erste und/oder der dritte Abdeckabschnitt (40, 50) in die Richtung (R) erstrecken.

10. Abdeckvorrichtung nach einem der vorhergehenden Ansprüche, **dadurch gekennzeichnet, dass** der dritte Abdeckabschnitt (50) ein bis zum zweiten Verbindungsbereich (43) des ersten Abdeckabschnittes (40) reichendes Durchlasselement (3) aufweist, das an einem Isolationsabschnitt (55), der eine einen ein Isolationsmittel aufweisenden Hohlraum (6) umhüllende Hülle (4) aufweist, des dritten Abdeckabschnittes (50) angeordnet ist.

11. Abdeckvorrichtung nach Anspruch 10, **dadurch gekennzeichnet, dass** das Durchlasselement (3) eine höhere Durchlässigkeit pro Druckgefälle hat als der Isolationsabschnitt (55) des dritten Abdeckabschnittes (50).

12. Abdeckvorrichtung nach Anspruch 10 oder 11, **dadurch gekennzeichnet, dass** das Durchlasselement (3) von einem textilen Gewebe insbesondere mit Durchlassöffnungen ausgebildet ist, bevorzugt von einem Netzgitter oder demselben textilen Material ausgebildet ist, von dem die Hülle zumindest überwiegend ausgebildet ist.

13. Abdeckvorrichtung nach einem der Ansprüche 10 bis 12, **dadurch gekennzeichnet, dass** der Abstand des Isolationsabschnittes (55) des dritten Abdeckabschnittes (50) vom zweiten Verbindungsbereich (43) höchstens so groß ist, insbesondere zumindest im Wesentlichen gleich groß ist, wie der Abstand des zweiten Verbindungsbereiches (43) vom zweiten Querschnittsende (44) des ersten Abdeckabschnittes (40).

14. Abdeckvorrichtung nach einem der vorhergehenden Ansprüche, **gekennzeichnet durch** eine Mehrzahl von, insbesondere zumindest vier, Gruppen (A, B, C, D) von je drei Abdeckabschnitten (10, 20, 30, 40, 50, 60), die gemäß dem ersten, dem zweiten und dem dritten Abdeckabschnitt (30, 40, 50) ausgebildet sind.

15. Abdeckvorrichtung nach Anspruch 14, **dadurch gekennzeichnet, dass** mehrere, insbesondere sämtliche, Gruppen (A, B, C, D) im Querschnitt eine übereinstimmende Ausrichtung haben.

16. Abdeckvorrichtung nach Anspruch 14, **gekennzeichnet durch** eine spiegelsymmetrische Ausbildung zumindest zweier Gruppen (A, B, C, D) von Abdeckabschnitten (10, 20, 30, 40, 50, 60), insbesondere der Abdeckvorrichtung (1).

**Claims**

1. Covering device (1) comprising at least three covering portions (10, 20, 30, 40, 50, 60), wherein in a cross section of the covering device (1) a first of the covering portions (40) is arranged on a second of the covering portions (30) by means of a first connecting region (41) which is configured by a first cross-sectional end (42) of the first covering portion (40), and has a second cross-sectional end (44) which opposes the first cross-sectional end (42) and has a second connecting region (43) by which the first covering portion (40) is arranged on a third covering portion (50), wherein the second connecting region (43) of the first covering portion (40) in cross section is arranged spaced apart from the second cross-sectional end (44) of the first covering portion (40), **characterized in that** the first covering portion (40) is arranged by means of the second connecting region (43) on a cross-sectional end (52) of the third covering portion (50) which is equal to the first cross-sectional end (42) of the first covering portion (40).

2. Covering device according to Claim 1, **characterized in that** the spacing of the second connecting region (43) from the second cross-sectional end (44) of the first covering portion (40) is at least 1/20, in particular at least 1/10, preferably at least 1/7, particularly preferably at least 1/5 of the spacing of the first cross-sectional end (42) from the second cross-sectional end (44) .

3. Covering device according to one of the preceding claims, **characterized in that** at least one, in particular all, of the covering portions (10, 20, 30, 40, 50, 60) has an insulating portion (15, 25, 35, 45, 55, 65) with a sleeve (4) which encases at least one hollow space (6) having an insulating means and, in particular, has at least one end seam (8) which extends in a direction (R) which is at an angle, in particular at right-angles, to the cross-sectional plane for forming at least one of the cross-sectional ends (32, 34, 42, 44, 52, 54).

4. Covering device according to Claim 3, **characterized in that** the spacing between the first cross-sectional end (42) of the first covering portion (40) and the second cross-sectional end (44) of the first covering portion (40) deviates from the spacing between a first cross-sectional end (32, 52) of one of the other covering portions (10, 20, 30, 50, 60) and a second cross-sectional end (34, 54) of the other covering portion (10, 20, 30, 50, 60), or the spacing between the second cross-sectional end (44) of the first covering portion (40) and a through-passage element (3) of the first covering portion (40) deviates from the spacing between the second cross-sectional end (34, 54) of the other covering portion (10, 20, 30, 50, 60) and a through-passage element (3) of the other covering portion.

5. Covering device according to Claim 4, **characterized in that** the spacing in the outermost of the covering portions (10, 60) in cross section is greater than in the adjacent covering portion (20, 50).

6. Covering device according to one of Claims 3 to 5, **characterized in that** the sleeve (4) has at least one connecting seam (9) extending in a direction (R) which is at an angle, in particular at right-angles, to the cross-sectional plane for connecting the first covering portion (40) to the third covering portion (50).

7. Covering device according to one of the preceding claims, **characterized in that** the first covering portion (40) has a plurality of second connecting regions (43) which are spaced apart from one another in a direction (R) which is at an angle, in particular at right-angles, to the cross-sectional plane, wherein adjacent second connecting regions (43) define a through-passage (5) arranged therebetween.

8. Covering device according to Claim 7, **characterized in that** the first covering portion (40) has at least three, preferably at least five, second connecting regions (43) which are spaced apart from one another in the direction (R), and particularly preferably has as many second connecting regions (43) as the insulating portion (45) of the first covering portion (40) has transverse seams (7) running parallel to the cross-sectional plane.

9. Covering device according to one of the preceding claims, **characterized in that** the second connecting region (43) in cross section extends in a direction (R) which is at an angle, and in particular at right-angles, to the cross-sectional plane at least substantially as far as the first and/or the third covering portion (40, 50) extend in the direction (R).

10. Covering device according to one of the preceding claims, **characterized in that** the third covering portion (50) has a through-passage element (3) which extends as far as the second connecting region (43) of the first covering portion (40) and which is arranged on an insulating portion (55), which has a sleeve (4) encasing a hollow space (6) having an insulating means, of the third covering portion (50).

11. Covering device according to Claim 10, **characterized in that** the through-passage element (3) has a higher permeability per pressure drop than the insulating portion (55) of the third covering portion (50).

12. Covering device according to Claim 10 or 11, **characterized in that** the through-passage element (3) is formed from a textile woven fabric, in particular with through-openings, and is preferably configured from meshwork or the same textile material from which the sleeve is at least substantially configured.

13. Covering device according to one of Claims 10 to 12, **characterized in that** the spacing of the insulating portion (55) of the third covering portion (50) from the second connecting region (43) is at most as large as, in particular at least substantially equally large as, the spacing of the second connecting region (43) from the second cross-sectional end (44) of the first covering portion (40).

14. Covering device according to one of the preceding claims, **characterized by** a plurality of, in particular at least four, groups (A, B, C, D) of three covering portions (10, 20, 30, 40, 50, 60) which are configured according to the first, the second and the third covering portion (30, 40, 50).

15. Covering device according to Claim 14, **characterized in that** a plurality, in particular all, of the groups (A, B, C, D) have a matching orientation in cross section.

16. Covering device according to Claim 14, **characterized by** a mirror-symmetrical configuration of at least two groups (A, B, C, D) of covering portions (10, 20, 30, 40, 50, 60), in particular of the covering device (1).

**Revendications**

1. Dispositif de recouvrement (1) comprenant au moins trois portions de recouvrement (10, 20, 30, 40, 50, 60), dans une vue en coupe transversale du dispositif de recouvrement (1), une première des portions de recouvrement (40) étant disposée avec une première zone de liaison (41), qui est formée par une première extrémité en coupe transversale (42) de la première portion de recouvrement (40), sur une deuxième des portions de recouvrement (30), et comportant une deuxième extrémité en coupe transversale (44), qui est opposée à la première extrémité en coupe transversale (42), et une deuxième zone de liaison (43) avec laquelle la première portion de recouvrement (40) est disposée sur une troisième portion de recouvrement (50), la deuxième zone de liaison (43) de la première portion de recouvrement (40) étant disposée, dans la vue en coupe transversale, à distance de la deuxième extrémité en coupe transversale (44) de la première portion de recouvrement (40), **caractérisé en ce que** la première portion de recouvrement (40) est reliée à la deuxième zone de liaison (43) à une extrémité en coupe transversale (52) de la troisième portion de recouvrement (50) qui est la même que la première extrémité en coupe transversale (42) de la première portion de recouvrement (40).

2. Dispositif de recouvrement selon la revendication 1, **caractérisé en ce que** la distance de la deuxième zone de liaison (43) à la deuxième extrémité en coupe transversale (44) de la première portion de recouvrement (40) est d'au moins 1/20, notamment d'au moins 1/10, de préférence d'au moins 1/7, de manière particulièrement préférée d'au moins 1/5, de la distance de la première extrémité en coupe transversale (42) à la deuxième extrémité en coupe transversale (44).

3. Dispositif de recouvrement selon l'une des revendications précédentes, **caractérisé en ce qu'**au moins une, notamment la totalité, des portions de recouvrement (10, 20, 30, 40, 50, 60) comporte une portion d'isolation (15, 25, 35, 45, 55, 65) pourvue d'une gaine (4) qui enveloppe au moins une cavité (6) qui comporte un moyen d'isolation, et en particulier au moins une couture d'extrémité (8) qui s'étend dans une direction (R) qui est inclinée, notamment à angle droit, par rapport à un plan en coupe transversale et qui est destinée à former au moins une des extrémités en coupe transversale (32, 34, 42, 44, 52, 54).

4. Dispositif de recouvrement selon la revendication 3, **caractérisé en ce que** la distance entre la première extrémité en coupe transversale (42) de la première portion de recouvrement (40) et la deuxième extrémité en coupe transversale (44) de la première portion de recouvrement (40) diffère de la distance entre une première extrémité en coupe transversale (32, 52) de l'une des autres portions de recouvrement (10, 20, 30, 50, 60) et une deuxième extrémité en coupe transversale (34, 54) de l'autre portion de recouvrement (10, 20, 30, 50, 60) ou la distance entre la deuxième extrémité en coupe transversale (44) de la première portion de recouvrement (40) et un élément de passage (3) de la première portion de recouvrement (40) diffère de la distance entre la deuxième extrémité en coupe transversale (34, 54) de l'autre portion de recouvrement (10, 20, 30, 50, 60) et un élément de passage (3) de l'autre portion de recouvrement.

5. Dispositif de recouvrement selon la revendication 4, **caractérisé en ce que** la distance au niveau de la plus extérieure des portions de recouvrement (10, 60) dans la vue en coupe transversale est plus grande qu'au niveau de la portion de recouvrement adjacente (20, 50).

6. Dispositif de recouvrement selon l'une des revendications 3 à 5, caractérisé que la gaine (4) comporte au moins une couture de liaison (9) qui s'étend dans une direction (R) inclinée, notamment à angle droit, par rapport au plan en coupe transversale et qui est destinée à relier la première portion de recouvrement (40) à la troisième portion de recouvrement (50).

**7.** Dispositif de recouvrement selon l'une des revendications précédentes, **caractérisé en ce que** la première portion de recouvrement (40) comporte une pluralité de deuxièmes zones de liaison (43) qui sont espacées les unes des autres dans une direction (R) qui est inclinée, notamment à angle droit, par rapport au plan en coupe transversale, des deuxièmes zones de liaison adjacentes (43) délimitant un passage (5) disposé entre elles.

**8.** Dispositif de recouvrement selon la revendication 7, **caractérisé en ce que** la première portion de recouvrement (40) comporte au moins trois, de préférence au moins cinq, deuxièmes zones de liaison (43) espacées les unes des autres dans la direction (R), de manière particulièrement préférée au moins autant de deuxièmes zones de liaison (43) que la portion d'isolation (45) de la première portion de recouvrement (40) comporte de coutures transversales (7) qui s'étendent parallèlement au plan en coupe transversale.

**9.** Dispositif de recouvrement selon l'une des revendications précédentes, **caractérisé en ce que** la deuxième zone de liaison (43) s'étend dans la vue en coupe transversale dans une direction (R) qui est inclinée, notamment à angle droit, par rapport au plan en coupe transversale, au moins sensiblement autant que la première et/ou la troisième portion de recouvrement (40, 50) s'étendent dans la direction (R).

**10.** Dispositif de recouvrement selon l'une des revendications précédentes, **caractérisé en ce que** la troisième portion de recouvrement (50) comporte un élément de passage (3) qui s'étend jusqu'à la deuxième zone de liaison (43) de la première portion de recouvrement (40) et qui est disposée au niveau d'une portion d'isolation (55) de la troisième portion de recouvrement (50), laquelle portion d'isolation comporte une gaine (4) entourant une cavité (6) qui comporte un moyen d'isolation.

**11.** Dispositif de recouvrement selon la revendication 10, **caractérisé en ce que** l'élément de passage (3) présente une perméabilité par chute de pression supérieure à celle de la portion d'isolation (55) de la troisième portion de recouvrement (50).

**12.** Dispositif de recouvrement selon la revendication 10 ou 11, **caractérisé en ce que** l'élément de passage (3) est formé d'un tissu textile, pourvu notamment d'ouvertures de passage, de préférence d'un treillis ou du même matériau textile dont la gaine est au moins principalement formée.

**13.** Dispositif de recouvrement selon l'une des revendications 10 à 12, **caractérisé en ce que** la distance de la portion d'isolation (55) de la troisième portion de recouvrement (50) à la deuxième zone de liaison (43) est au plus aussi grande, notamment au moins sensiblement aussi grande, que la distance de la deuxième zone de liaison (43) à la deuxième extrémité en coupe transversale (44) de la première portion de recouvrement (40).

**14.** Dispositif de recouvrement selon l'une des revendications précédentes, **caractérisé par** une pluralité de groupes, notamment au moins quatre, (A, B, C, D) de chacun trois portions de recouvrement (10, 20, 30, 40, 50, 60) qui sont formées conformément aux première, deuxième et troisième portions de recouvrement (30, 40, 50).

**15.** Dispositif de recouvrement selon la revendication 14, **caractérisé en ce que** une pluralité, notamment la totalité, des groupes (A, B, C, D) ont une orientation concordante dans la vue en coupe transversale.

**16.** Dispositif de recouvrement selon la revendication 14, **caractérisé par** une conformation symétrique d'au moins deux groupes (A, B, C, D) de portions de recouvrement (10, 20, 30, 40, 50, 60), en particulier du dispositif de recouvrement (1).

Fig. 1

EP 4 223 113 B1

Fig. 2

Fig. 3

EP 4 223 113 B1

Fig. 4

Fig. 5

Fig. 8

EP 4 223 113 B1

Fig. 10

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20221416 U1
- US 20140250596 A1